# EUROPEAN PATENT APPLICATION

(11) **EP 1 719 413 A1**
(43) Date of publication of application: **08.11.2006**
(21) Application number: 05103699.4
(22) Date of filing: 03.05.2005
(51) Int. Cl.: A21D 13/08, A21D 17/00, A23G 9/50, A23L 1/164, A23G 9/48, A21C 15/02

(54) **Composite frozen confections**

(71) Applicant: NESTEC S.A., 1800 Vevey (CH)
(72) Inventor: Green, John, 60650, LE MONT ST. ADRIEN (FR); Gaeng, Wolfgang, 60650, LE MONT ST.ADRIEN (FR); Plessier, Alain, Marcel, Alexis, 60510, BRESLES (FR)
(74) Representative: Archambault, Jean

(57) **Abstract**

A reformed biscuit product suitable for forming composite frozen compositions comprises a solid mixture of a particulate cooked biscuit material and a cocoa butter equivalent type of confectionery fat is described; the process for manufacturing it comprises coating the particles with the fat, compacting the mixture of particulate biscuit and fat in an agglomerate of the shape of a receptacle or coating and maintaining the shape of the compacted mixture by solidification of the fat; also described is a process for manufacturing a composite frozen confection comprising a reformed biscuit product formed into a cone containing ice cream.

## Description

### Field of the invention

The present invention is concerned with a coating or receptacle, composite frozen confections comprising it, especially ice cream cones, and a process for the preparation of such composite frozen confections.

In the field of ice confectionery there is a need to procuring new eating experiences and new textures. Particularly attractive is the contrast of texture between a soft aerated ice confectionery and coating layers or receptacle of biscuit material for the frozen confectionery.

### Background of the invention

Composite ice confections are known which consist of an ice cream combined with a biscuit or a crisp wafer, in particular of the type such as cakes, bars and cones, cigars or sandwiches made of wafer surrounding an ice cream or filled with ice cream. These products must include a system which makes the biscuit or the wafer impervious to the moisture coming from the ice cream, in order to prevent it from losing its crisp nature, either during storage or during consumption. This is usually carried out by coating either the surface of the biscuit in contact with the ice cream, or the ice cream itself, with a fatty composition, for example with chocolate or with a coating containing chocolate.

It has been suggested, e.g. in USP 3,508,926, to reuse crumb or ground baked biscuit for secondary products, e.g. as inclusions in ice cream bulk. The problem to solve was that the baked food particles lost their crispness in the presence of water coming from the ice cream. In this baked food material the starch is gelatinised in the baking process. In order to solve the problem of high water absortivity of particles of food material containing gelatinised starch, it was suggested to mix the particles of food material with a mixture of a shortening and emulsifier, then to rewet them, preferably with a sugar syrup and to finally dry them. The resulting crunch could be used as inclusion in ice cream bulk.

In French patent application FR-A-2204363 a biscuit composition which is suitable for use with ice cream without losing its crispy character is made by forming a dispersion of chocolate in a sugar syrup in the presence of an emulsifier, heating the dispersion, incorporating into it a cooked biscuit flour, cooling and forming the paste obtained into agglomerated biscuit sheets or cups into which or between which ice cream is deposited.

EP1302112 describes a biscuit-like mass that looks like a biscuit at -10° C or below, which comprises a mixture comprising from 20-60 % particles of baked biscuit and from 40-80 % fat and which is liquid and pumpable at 15°C or above , as well as a composite ice confectionery article made by bringing ice confectionery into contact with the biscuit-like mass which keeps its biscuit-like consistency on storage and consumption.The mixture contains from 20 to 60 % by weight of biscuit particles and 80 to 40 % by weight of fat. The fat employed is selected from the group consisting of partially hydrogenated vegetable oil, e.g. vegetable oils commonly used in food such as cottonseed or soybean oil, unmodified coconut fat, fractionated palm oil, partly fractionated milk fat and mixtures of those fats. Any vegetable fat or mixture whose melting point ranks from 10° C to 35° C and with the required melting characteristics as outlined hereinbefore can be used with similar results in the context of the invention. Preferably, the fat is high oleic partially hydrogenated vegetable oil. Chocolate, nut paste, peanut paste or fat based confectionery "compound" coating based on cocoa butter, respectively cocoa butter equivalents may be used as a fat and/or as flavour base in an amount representing 5 to 50 % by weight of the fat.

EP1283012 describes a reconstituted biscuit product comprising fragments of cooked biscuit bound together with a binder comprising a carbohydrate and fat, a process for producing a reconstituted biscuit wherein a mixture of from 10-30 % of biscuit fragments and from 60-90 % of binder is formed and dried, and a composite ice confectionery product comprising a reconstituted biscuit as above in contact with an ice confectionery mass;

EP664676 describes a method for forming composite frozen novelties which comprise an ice cream-like dessert composition having discrete uncooked cookie doughy additions therein by co-extrusion in an extrusion apparatus including a main die having an entrance and an exit disposed downstream of the entrance, and at least one intermediate die, the intermediate die being positioned within the main die at a location upstream of the exit of the main die. An ice cream-like dessert composition is introduced to the entrance of the main die in at least a semi-frozen state. A flowable discrete uncooked cookie doughy addition is extruded through the intermediate die at an elevated temperature, e.g. at least about 50° F (10°C) in order to ensure good flow properties during extrusion. The dessert composition and the discrete doughy addition are extruded together through the exit of the main die to form a composite extrudate.

### Summary of the invention

The present invention also provides a reformed biscuit product suitable for forming composite frozen compositions such as ice cream in which the biscuit is substantially impervious to the moisture coming from the ice cream. However, the biscuit of the present invention differs from biscuits of the prior art in that it is not a pumpable liquid preparation as in EP1302112, no other binder such as a carbohydrate is required and no drying step is required in the process as in EP1283012, it is not an emulsion containing sugar syrup as in US3508926 and FR2204363, nor is it produced from uncooked biscuit crumbs as in EP664676. It has the further advantage of a better nutritional profile of the material.

Accordingly, the present invention provides a reformed biscuit product suitable for forming composite frozen compositions comprising:
- a solid mixture of a particulate cooked biscuit material and a cocoa butter equivalent type of confectionery fat wherein the particles are coated with the fat,
- the mixture of particulate biscuit and fat is compacted in an agglomerate of the shape of a receptacle or coating and
- the shape of the compacted mixture is maintained by solidification of the fat.

### Detailed description of the invention

In the context of the invention the biscuit material used may be based on crushed cooked biscuit pieces or crushed breakfast cereals.

As material base one can use cereals flakes, puffed cereals, short bread, chocolate chips cookies or cone wafers. This material base can be combined with a minor proportion of nut pieces or seeds such as almond, hazelnut,linseeds or sesame for example.

The particles of the biscuit material may be in crumb, granular or powdery form and the particle size may be from 0.5 to 10 mm, preferably from 1 to 6 mm, and especially from 4 to 6 mm average diameter D (1,0).

The confectionery fat is a vegetable fat such as a cocoa butter substitute. Cocoa butter substitutes are well known to persons skilled in the art and include "cocoa butter alternatives", "cocoa butter equivalents"and "cocoa butter replacers". These vegetable fats are described in "Industrial Chocolate Manufacture and Use", Edited by S.T.Beckett, Second Edition, 1994, pages 242-256, published by Blackie Academic & Professional.

The reformed biscuit product mixture may contain from 15 to 40 % by weight of fat and from 85 % to 60 % by weight of cooked biscuit material. Preferably, the reformed biscuit product mixture may contain from 25% to 35% by weight of fat and from 75% to 65% by weight of cooked biscuit material.

The present invention also provides a process for preparing a reformed biscuit product suitable for forming composite frozen compositions which comprises blending particulate cooked biscuit pieces or breakfast cereals with a melted fat to coat the particulate cooked biscuit pieces with the fat wherein the melted fat has a temperature of above 30°C, compacting the coated particulate to obtain an agglomerate of the shape of a receptacle or a coating and cooling the compacted particulate to maintain the shaped agglomerate.

The particulate cooked biscuit pieces may be obtained from cooked biscuit or breakfast cereal, if necessary by a size reduction operation, which involves crushing or breaking traditional biscuit material or breakfast cereal into smaller particulate form such as crumbs, e.g. having an average diameter D (1,0) of from 0.5 to 10 mm. The fat should be melted to a temperature above 30°C, preferably from 32°C to 60°C, and more preferably from 35°C to 50°C.[

The blending may be carried out batchwise or continuously using from 15 % to 40 % by weight of fat and from 85 % to 60 % by weight of cooked biscuit material. Advantageously, the particles of the particulate biscuit pieces or particulate breakfast cereal are coated substantially evenly with the fat in order to enable consistent deposit and forming.

In a batchwise operation, a vessel with a mixing device may be used, conveniently a temperature-controlled vessel with open mixing paddles. Preferably, the paddles should be designed to ensure that substantially no further crushing or size reduction of the particulate cooked biscuit pieces takes place.

In a continuous operation, the mixer conveniently has a screw blender and a mixing tube around it. Preferably the screw mixer is a fast mixing device in which continuously feeded dry particles are injected by a screw blender into a mixing tube, in which latter predosed liquid fat is introduced and centrifuged by a rotating spiral. The liquid vortex thus produced encounters the broken-up flow of dry particles. Preferably, the screw blender feeding the dry particles turns in one direction and the spiral in the reverse direction.. As an alternative the liquid may be injected into the screw blender and the dry particles into the surrounding tube.

The reformed biscuit product of the present invention may be used as a coating or receptacle such as a sandwich, a bar and preferably a cone or a cup in a composite frozen product.

The reformed biscuit product may be formed into a receptacle, for example a cone suitable for filling with a frozen confectionery material, for instance, on a cone machine which includes a support device to hold a packaging sleeve. A suitable portion of the reformed biscuit and fat mixture is deposited into the sleeve. It is possible to dose the mixture with a volumetric head or a vibrator. The quantity of biscuit anf fat mixture deposited preferably is 10 to 19 g per sleeve. There is a bottom support mould which moves into position as the machine indexes forward and supports the sleeve for conveniently about 0.8 s, at the same time a rotating male mould, preferably rotating at 100 to 500 rpm, descends into the packaging sleeve to form the reformed biscuit/fat mixture and this is held for a short period time of conveniently about 0.6 s. At the end of forming both support mould and male forming mould are retracted in a vertical motion to allow the forward index of the machine. The complete cycle time of the forming stage is conveniently about 2 s. The packaging sleeve may be made from paper, paper/aluminium or a suitable plastic packaging material. Preferably, the blend of the particulate cooked biscuit pieces or breakfast cereal and fat are maintained at a temperature of above 30°C to prevent substantial crystallisation of the fat which can have an adverse effect on the forming process.

The present invention also provides a composite frozen confection which comprises a coating or a receptacle of a reformed biscuit product according to the present invention and ice confectionery.

The present invention further provides a process for manufacturing a composite frozen confection comprising a reformed biscuit product according to the present invention as a coating or receptacle and ice confectionery, which comprises blending particulate cooked biscuit pieces or breakfast cereals having an average diameter of from 0.5 to 10 mm with a melted fat to coat the particulate cooked biscuit pieces with the fat wherein the melted fat has a temperature of above 30°C to give the reformed biscuit product, and bringing ice confectionery and the reformed biscuit product into contact.

When the composite frozen confection is a cone containing ice confectionery, the reformed biscuit product formed as a cone is preferably maintained at a temperature above 30°C until the ice confectionery has been brought into contact with it. Preferably, once the cone has been formed in the packaging sleeve, it should be immediately filled with the ice confectionery, e.g. within 21 s, preferably within 14 s.

Accordingly, the present invention further provides a process for manufacturing a composite frozen confection comprising a reformed biscuit product formed into a receptacle containing ice cream which comprises blending from 85 % to 60 % by weight of particulate cooked biscuit pieces or breakfast cereals with from 15 % to 40 % by weight of a melted fat to coat the particulate cooked biscuit pieces with the fat wherein the melted fat has a temperature of above 30°C to give a reformed biscuit product, forming the reformed biscuit product into a receptacle while maintaining the temperature of the blend of the particulate cooked biscuit pieces or breakfast cereal and fat above 30°C, and filling the receptacle maintained at a temperature above 30°C with ice confection within 21s of the formation of the receptacle.

In the present invention, although not wishing to be bound by theory, it is thought that the fat acts as a binding agent during the forming process and the binding is a combination of forming pressure and the low temperature of the ice cream. Therefore, no other binding agent is necessary and preferably no other binding agent is used in the present invention.

The ice confectionery in the composite frozen confection may be ice cream, an aerated ice composition, aerated ice cream, sherbet or sorbet or ice yoghurt having a soft texture. The aeration may be at an overrun of between 40 and 150 %, and preferably at 80 to 120 % overrun.

The ice confectionery may be extruded and may consist of distinct ice cream, sherbet or sorbet or ice yoghurt of different colours and perfumes which are co-extruded and may contain syrups or sauces or small inclusion particles so as to produce a composite or marbled or spotted body of substantial soft texture in which the solid inclusion particles may be those commonly used in ice cream, for example dry fruit, nut, sugar confectionery or gel particles .

In addition to the contrasted ice confectionery and biscuit-like coating or receptacle, additional material may be present such as fat-based crispy material, preferably chocolate or confectionery coating and preferably the biscuit-like coating or receptacle may be further coated with a confectionery coating at least on its surface in contact with the ice confectionery in order to further protect it from water uptake from the ice confectionery during storage and distribution.

There are mainy differences and advantages of the product and process of the invention in comparison to existing wafer cones and processes to make them.
- Existing wafer cones do not use cocoa butter equivalent fat. The cocoa butter equivalent has three functions: it acts as a binder for the biscuit particles; it serves as a moisture barrier; it has a better mouthfeel. When a fat is used in conventional sugar wafers, the main role of the fat is to release the wafer from the baking plates.
- Existing wafer cones are produced from a homogeneous batter, giving rise to a homogeneous appearance and texture. By contrast, the presently manufactured cones have an artisan appearance;
- Existing wafer cones can only be made out of the packaging sleeve, whereas the presently manufactured cones are formed within the packaging sleeve;
- Existing wafer cones can only be formed at temperatures greater than 150° C with baking time of about 60 s plus about 1 s rolling time, whereas the presently manufactured cones are formed at temperatures below 32° C while using a rotating forming tool and pressure and during about 2s total forming time;
- The size of the cone formed can be varied without changing the forming equipment but by simply changing the dosing weight of biscuit material in the sleeve; in this way the size can be varied for example from 85 mm to 110 mm sidewall length.

Although the preferred embodiment of a composite frozen confection according to the invention is a frozen confectionery cone, the composite frozen confection may be in the form of a bar or a sandwich which may be prepared by well known conventional processes when using reformed biscuit as defined above compacted into slabs for example.

### Examples

The following Examples further illustrate the present invention with reference to the accompanying drawing in which:

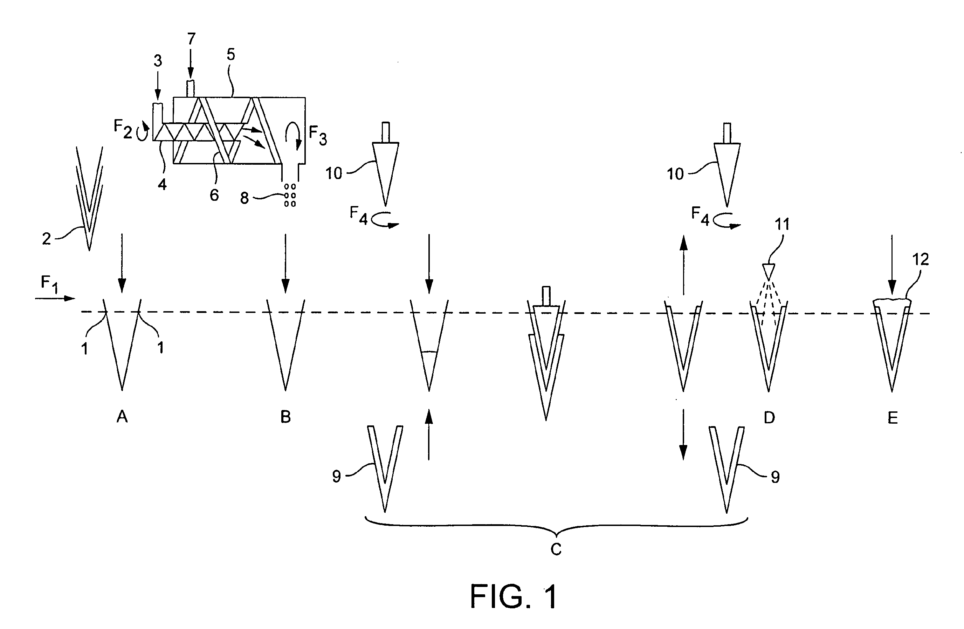

Figure 1 is a schematic general view of the process for preparing an ice cream cone.

In these examples parts are given by weight.

As shown in Figure 1, a cone manufacturing line travelling stepwise in the direction f1 comprises a sleeve depositing stage A, a mixing stage B for mixing and depositing the biscuit/fat mixture, a biscuit cone forming stage C, a coating stage D and an ice cream filling stage E.

The line comprises sleeve supporting members 1 in which the paper/aluminium sleeves 2 are deposited at stage A.

At stage B, the biscuit particulate 3 is feeded in a small screw feeder 4 rotating in the direction f2 and injected into the mixing tube 5 which is provided with a mixing spiral 6 rotating in the direction f3. The liquid fat 7 is introduced in the mixing tube 5 and the coated biscuit particles 8 are deposited into the sleeves 2 by a volumetric dosing unit (not represented).

At stage C, a cone-shaped female bottom support mould 9 is raised and placed in a position were it supports the sleeve and a conical male mould 10 rotating in the direction f4 descends into the sleeve, presses the biscuit particles 8 and held so as to form the biscuit particles into a cone-shaped receptacle, after which the rotating male mould 10 and the support female mould 9 move rapidly out of position to leave the formed cereal cone in the sleeve, the male mould being lifted and the female mould descended.

At stage D, the internal surface of the formed cereal cone is coated with melted chocolate compound by spraying through nozzle 11. This step is preferred but optional.

At stage E, the coated cereal cone in the sleeve is filled with ice cream 12. The product is then packaged by inserting a lid and crimping the sleeve rim over the lid to close the package in a conventional operation (not shown).

### Example 1

### I) Preparation of the reformed biscuit product

Breakfast Cereal flakes of size 6 x 6 mm (CPW Golden Graham obtained from CPW Factory, Rumilly, France) are reduced in size to particles having an average diameter of from 0.5-6 mm. The resulting particulate material has a granulometry as measured by sieving such that > 90 % of the particles are retained on a sieve of 0.7 mm openings and < 10 % of the particles are retained on a sieve of 4.8 mm openings. At stage B, 70 parts of these particulate breakfast cereals at ambient temperature are blended with 30 parts of a cocoa butter equivalent based on various exotic oils such as shea, illipe, mango, sal, and fractionated and non-hydrogenated palm supplied by Aarhus Oliefabfik A/S, Denmark under the name "Illexao 30-61" (Illexao is a Registered Trade Mark) which has been melted to a temperature of 45°C. The components are continuously mixed at 45°C in a fast mixing device "Parimix" (Parimix is a Registered Trade Mark) in which continuously feeded dry biscuit particles are collected in a rotating screw feeder and injected into a mixing tube surrounding the screw feeder in which latter tube the liquid fat is introduced and centrifuged by a spiral rotating in a direction opposite to that of the screw , such that the liquid vortex thus produced encounters the broken-up flow of dry particles in the reverse direction, until the breakfast cereal particles are coated substantially evenly with the cocoa butter equivalent to give the reformed biscuit product which is a solid mixture of breakfast cereal particles having an average diameter of 0.5-6 mm and cocoa butter equivalent.

### II) Formation of a cone from the reformed biscuit product

The reformed biscuit product prepared in I) is maintained at a temperature of 32° C and 19 grams is deposited into a paper/aluminium packaging sleeve at stage B. The sleeve filled with the reformed biscuit product held in a bottom support mould of a forming device on a cone machine as shown in Figure 1. A rotating male mould rotating continuously at 150 rpm descends into the packaging sleeve and held for 0.6 s to form the deposited reformed biscuit product into the packaging cone-shaped sleeve, after which the support and rotating device move rapidly out of position to leave the formed cone in the packaging sleeve in a total cycle time of 2 seconds.

### Example 2

### Preparation of a composite frozen confection as a cereal cone

The cone prepared in Example 1 is maintained at a temperature of 32° C and within 14 s of its formation, ice cream is filled into it on the standard filling line. The cooling effect of the ice cream rapidly crystallises the cocoa butter equivalent giving a composite frozen confection comprising a rigid cone filled with ice cream. The cone-shaped reformed biscuit product as a receptacle for the ice cream acts as a good moisture barrier.

### Example 3

### Preparation of a composite frozen confection as a chocolate compound-coated cereal cone

The process of Example 2 is repeated with the additional step of coating the internal surface of the formed cereal cone with a compound coating composition before filling with ice cream.

The coating composition is made of a mixture of refined vegetable fats, sugar, cocoa powder and soya lecithin with a total fat content of 52 to 55%. The mixture is made to pass through a refiner to get a particle size of approximately 85 % of the particles having a mean diameter < or = 25 micron. It has a plastic viscosity of 60-100 cP and a yield value of 3-7 D/cm² as measured using a Brookefield LVT model viscometer with a spindle 21 at 40° C and it is sprayed with a nozzle at a temperature of 50° C until the internal surface and the upper rim of the cereal cone are entirely coated, by using 6.5 g of coating.

## Claims

1. A reformed biscuit product suitable for forming composite frozen compositions comprising:
- a solid mixture of a particulate cooked biscuit material and a cocoa butter equivalent type of confectionery fat wherein the particles are coated with the fat,
- the mixture of particulate biscuit and fat is compacted in an agglomerate of the shape of a receptacle or coating and
- the shape of the compacted mixture is maintained by solidification of the fat.

2. A reformed biscuit product according to claim 1 wherein the particulate cooked biscuit material is cooked biscuit pieces or breakfast cereals.

3. A reformed biscuit product according to claim 1 wherein the particles of the biscuit material are in crumb, granular or powdery form and the particle size is from 0.5 to 10 mm average diameter.

4. A reformed biscuit product according to claim 1 wherein the reformed biscuit product contains from 15 % to 40 % by weight of fat and from 85 % to 60 % by weight of cooked biscuit material.

5. A process for the preparation of a reformed biscuit product as claimed in claim 1 which comprises blending particulate cooked biscuit pieces or breakfast cereals with a melted fat to coat the particulate cooked biscuit pieces with the fat wherein the melted fat has a temperature of above 30°C, compacting the coated particulate and cooling the compacted particulate to obtain a shaped agglomerate.

6. A composite frozen confection which comprises a coating or a receptacle of a reformed biscuit product according to any one of claims 1 to 4 and ice confectionery.

7. A composite frozen confection according to claim 6, in which the the coating of the reformed biscuit product is in the form of a cone.

8. A process of forming a cone from the reformed biscuit product according to any of claims 1 to 4 which comprises depositing a suitable portion of the reformed biscuit product maintained at a temperature above 30°C into a packaging sleeve held by a bottom support mould of a forming device on a cone machine, descending a rotating mould into the packaging sleeve and helding for a period of time from 0.5 to 2 seconds to form the deposited reformed biscuit product into a cone, after which the bottom support and rotating device move out of position to leave the formed cone in the packaging sleeve.

9. A process for manufacturing a composite frozen confection comprising a reformed biscuit product formed into a cone containing ice cream which comprises blending from 85 % to 60 % by weight of particulate cooked biscuit pieces or breakfast cereals with from 15 % to 40 % by weight of a melted cocoa butter equivalent type of confectionery fat to coat the particulate cooked biscuit pieces with the fat wherein the melted fat has a temperature of above 30°C to give a reformed biscuit product, forming the reformed biscuit product into a cone while maintaining the temperature of the blend of the particulate cooked biscuit pieces or breakfast cereal and fat above 30°C, and filling the cone maintained at a temperature above 30°C with ice confection within 21 seconds of the formation of the cone.

10. A composite frozen confection according to claim 6, in which the ice confectionery is an aerated ice composition, aerated ice cream, sherbet or sorbet or ice yoghurt having a soft texture.

11. A composite frozen confection according to claim 6, in which the aeration is at an overrun of between 40 and 150 %, and preferably at 80 to 120 % overrun.

12. A composite frozen confection according to claim 6, in which the ice confectionery is extruded and consists of distinct ice cream, sherbet or sorbet or ice yoghurt of different colour and perfumes which are co-extruded and may contain syrups or sauces or small inclusion particles so as to produce a composite or marbled or spotted body of substantial soft texture.

13. A composite frozen confection according to claim 6, which comprises in addition to the ice confectionery and the biscuit coating or receptacle, additional material such as fat-based crispy material, preferably chocolate or confectionery coating.

14. Composite frozen confection according to claim 6 in the form of a a cone, a cup, a sandwich or a bar.
